# EUROPÄISCHE PATENTSCHRIFT

(11) **EP 2 209 187 B1**
(45) Veröffentlichungstag und Bekanntmachung des Hinweises auf die Patenterteilung: **27.03.2013**
(21) Anmeldenummer: 10000262.5
(22) Anmeldetag: 13.01.2010
(51) Int. Cl.: H02K 7/104, H02K 7/102

(54) **Rohrantrieb**
Tubular drive
Entraînement tubulaire

(30) Priorität: 16.01.2009 DE 102009004931
(43) Veröffentlichungstag der Anmeldung: 21.07.2010
(73) Patentinhaber: Becker-Antriebe GmbH, 35764 Sinn (DE)
(72) Erfinder: Naumann, Bernd, 35075 Gladenbach (DE); Schneider, Dieter, 35719 Angelburg (DE); Simon, Volker, 35764 Sinn (DE)
(74) Vertreter: Müller, Eckhard

(56) Entgegenhaltungen:
- EP-A2- 1 434 332
- EP-A2- 1 445 849
- DE-A1- 10 060 925
- FR-A1- 2 724 505

## Beschreibung

Die vorliegende Erfindung betrifft einen Rohrantrieb mit einem Motor, der einen drehfest auf einer Welle angeordneten Rotor, der Rotorbleche und einen Kurzschlussring umfasst, aufweist, sowie mit einer der einen Stirnseite des Rotors zugeordneten Bremseinheit, die zentrisch auf der Welle angeordnet ist, wobei der Kurzschlussring die Welle umgibt und an dieser einen Stirnseite des Rotors angeordnet ist, wobei die Bremseinheit eine Bremsscheibe sowie einen dazu zugeordneten Reibbelag und ein sich auf der anderen Seite des Reibbelags anlegendes Lagerschild, das eine Drehmomentstütze bildet, aufweist, wobei mindestens eine Feder, die sich an der Stirnseite des Rotors abstützt, eine Kraft auf die Bremsscheibe ausübt und somit den Reibbelag zwischen Bremsscheibe und Lagerschild klemmend hält, und wobei die Bremsscheibe ein Metallteil aufweist, das dann, wenn unter Betätigung des Motors in dem Rotor Strom fließt, die Bremsscheibe zu dem Rotor durch das sich im Rotor aufbauende Magnetfeld gezogen wird und dadurch der Reibbelag zwischen Bremsscheibe und Lagerschild freigegeben wird.

Solche Rohrantriebe werden in großen Stückzahlen gefertigt und dienen als Antriebe insbesondere für elektrisch betätigte Rollläden, Markisen oder Rolltore.

Rohrmotore sind beispielsweise in der DE 195 22 622 A1 beschrieben. Sie sind in ihren Außenabmessungen derart dimensioniert, dass sie in den Innenraum einer passenden Welle von der einen Seite aus eingeschoben werden können, um dann diese Welle gegenüber einem festen Lager zu drehen. Eine wichtige Vorgabe, die von solchen Rohrmotoren zu erfüllen ist, ist diejenige, dass sie in verschiedenen Stellungen zwischen zwei Endstellungen, das bedeutet zwischen dem vollständig geschlossenen Zustand und dem vollständig geöffneten Zustand, beispielsweise einer Markise, eines Rollladens oder Rolltors, angehalten und erneut betätigt werden können.

Die vorstehend erwähnte DE 195 22 622 A1 ist insbesondere auf die Steuerung eines solchen Rohrmotors gerichtet

Ferner ist aus DE 100 60 925 A1 ein Asynchronmotor mit einer Bremseinheit bekannt, bei der der Rotor drehfest mit einer Welle verbunden ist. Die Bremseinheit besteht aus einem Schild, einem Bremsbelag, einem Bremsbecher und einer fluxleitenden Scheibe. Desweiteren weist der Antrieb eine Stützfeder, ein als Einlegering ausgebildetes Fluxleitrohr sowie einen Kurzschlussring auf, wobei der Einlegering in einer Nut zwischen der Welle und dem Kurzschlussring angeordnet ist und axial in Richtung des Schildes über den Kurzschlussring hervorsteht. Bei einem Bestromen des Motors wird der Bremsbecher entgegen der Kraft der Stützfeder von den am Schild befestigten Bremsbelägen entfernt, so dass die Bremswirkung zwischen Bremsbecher und Bremsbelag aufgehoben ist. Der zugrundeliegende Wirkmechanismus beruht hierbei auf einem Herausleiten des magnetischen Flusses aus dem Rotor in Achsrichtung, so dass sich der Fluss nicht im Rotor, sondern in der fluxleitenden Scheibe schließt, d.h. die die Bremse bewegende Kraft wird durch einen abgeleiteten Teil des magnetischen Hauptfeldes des Asynchronmotors erzeugt.

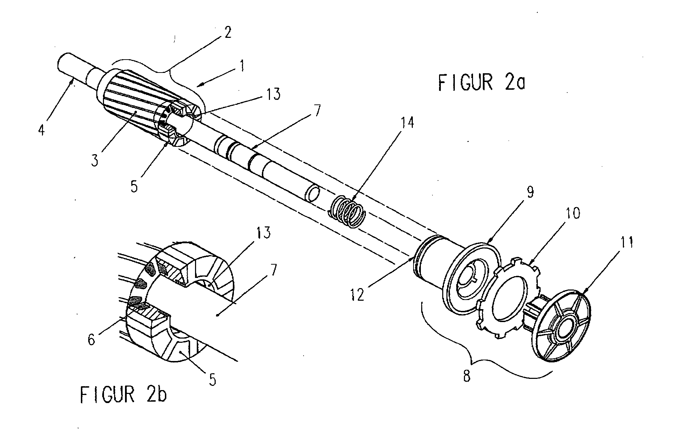

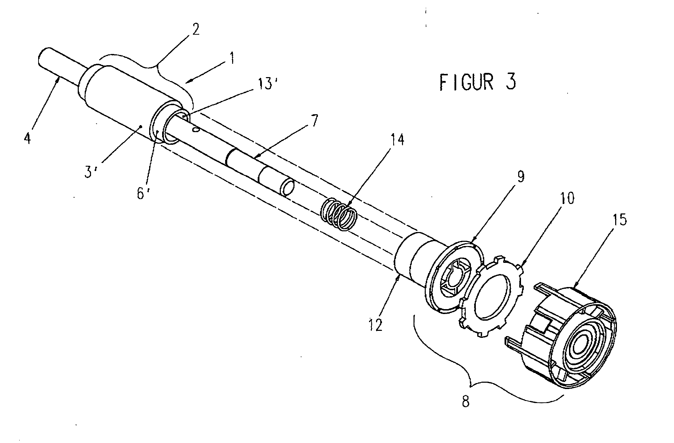

Rohrmotore, wie sie derzeit aus dem Stand der Technik bekannt sind, sind schematisch in Explosionsdarstellungen in den Figuren 2a, 2b und 3 der beigefügten Zeichnungen dargestellt.

Der Rohrantrieb, wie ihn die Figur 2a zeigt, umfasst einen Motor 1 mit einem Rotor 2, der eine Vielzahl Rotorbleche 3 umfasst. Der Rotor 2 ist fest auf einer Welle 4 montiert. An der einen Stirnseite des Rotors 2 ist ein zusätzliches Umlenkteil 5 vorgesehen, das fest mit dem Rotor 2 vergossen ist.

Das Umlenkteil 5, das mit dem Rotor 2 fest vergossen ist, ist in einer vergrößerten Darstellung in Figur 2b gezeigt. Dieses Umlenkteil 5 enthält einen Kurzschlussring, der mit dem Bezugszeichen 6 bezeichnet ist.

Die eine Seite der Welle 4 ist derart verlängert, dass an diesem Wellenabschnitt 7 eine Bremseinheit 8 angeordnet werden kann. Diese Bremseinheit 8 besteht aus einer Bremsscheibe 9, einem dazu zugeordneten Reibbelag 10 sowie einem Lagerteil 11.

Die Bremsscheibe 9 weist an ihrem dem Rotor 2 bzw. dem Umlenkteil 5 zugewandten Ende ein Metallteil 12 auf, mit dem sich die Bremsscheibe 9 gegen die Stirnseite des Umlenkteils 5 anlegt. Schließlich ist eine Ringnut 13, die zwischen der Welle 7 und einer inneren Ringfläche des Umlenkteils 5 gebildet ist, vorgesehen, in die sich der Endbereich einer Feder 14, die über den Wellenabschnitt 7 der Welle 4 geschoben ist, einlegt.

Um diese Einheit zusammenzubauen, wird, nachdem die Feder 14 auf den Wellenabschnitt 7 aufgeschoben ist, die Bremsscheibe 9 mit dem Reibbelag 10 lose über dem Wellenabschnitt 7 geführt, bis sie an der Feder 14 anschlägt. Danach wird das Lagerteil 11 auf die Welle 4 aufgedrückt. Beim Aufdrücken des Lagerteils 11 stößt das Lagerteil 11 gegen den Reibbelag 10 und die Bremsscheibe 9 an. Wird diese Bremseinheit 8 weiter in Richtung des Umlenkteils 5 gedrückt, wird die Feder 14 zunehmend gespannt und das Metallteil 12 der Bremsscheibe 9 wandert in Richtung des Umlenkteils 5. Die Bremseinheit 8 wird so lange weiter in Richtung des Umlenkteils 5 gedrückt, bis sich zwischen dem Metallteil 12 und dem Umlenkteil 5 ein Luftspalt von ca. 0,3 mm ergibt. In dieser Position ist die Montage der Bremseinheit 8 an dem Wellenabschnitt 7 der Welle 4 abgeschlossen.

Der so aufgebaute Rohrantrieb arbeitet wie folgt. Wenn an den Motor 1 Spannung angelegt wird, fließt im Rotor 2 ein großer Strom. Der in dem Kurzschlussring 6, der unter dem Umlenkteil 5 liegt, fließende Strom verursacht im Umlenkteil 5 ein Magnetfeld. Dieses Magnetfeld zieht das Metallteil 12 an und trennt somit die Bremsscheibe 9 von dem Lagerteil 11 und löst den reibenden Eingriff des Reibbelags 10 von dem Lagerteil 11. Wird der Motor 1 wieder abgeschaltet, so wird der Stromfluss unterbrochen. Das Magnetfeld am Umlenkteil 5 bricht zusammen und die Bremsscheibe 9 wird unter dem Druck der Feder 14 mit ihrem Reibbelag 10 gegen das Lagerteil 11 gedrückt, so dass eine weitere Drehung des nicht dargestellten Antriebsrohrs, in das der Motor 1 mit der Bremseinheit 8 eingesetzt ist, verhindert wird.

Bei dieser Lösung erzeugt das Magnetfeld am Umlenkteil 5 eine starke Magnetkraft, wodurch hohe Bremskräfte erreicht werden können. Nachteilig bei dieser Lösung ist allerdings, dass bei der Fertigung des Rotors 2 das Umlenkteil 5 mit eingegossen werden muss. Dieses Erfordernis verursacht einen zusätzlichen Arbeitsaufwand und Kosten für das erforderliche Material.

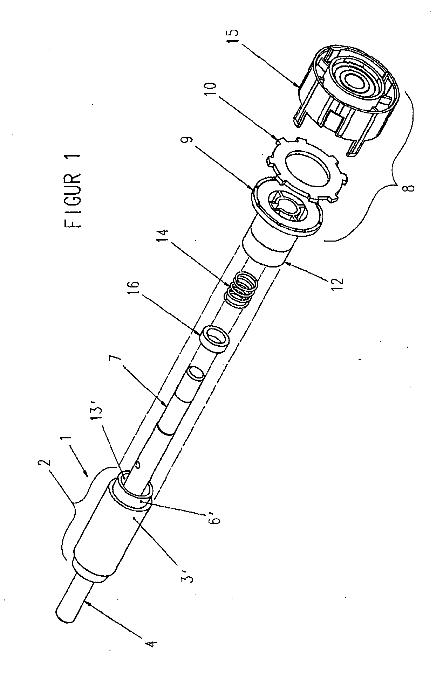

Ein weiterer Rohrantrieb ist schematisch in Figur 3 dargestellt. Der Aufbau entspricht im Wesentlichen demjenigen, der in Figur 2a dargestellt ist. Daher sind für Bauteile, die denjenigen entsprechen, wie sie in Figur 1 dargestellt und beschrieben sind, entsprechende Bezugszeichen verwendet.

Im Gegensatz zu der Ausführungsform der Figur 2a entfällt bei dem Aufbau, wie er in Figur 3 gezeigt ist, das Umlenkteil 5. Weiterhin ist das Lagerteil 11 der Ausführungsform in Figur 2a in der Ausführungsform der Figur 3 durch ein Lagerschild 15 ersetzt. Die magnetische Kraft zum Anziehen des Metallteils 12 wird durch einen Kurzschlussring 6' und das Rotorblech 3' realisiert. Dieser geänderte Kurzschlussring 6' ist so zentrisch um den Wellenabschnitt 7 angeordnet, dass wiederum eine Ringnut 13', vergleichbar mit der Ringnut 13 der Ausführungsform der Figur 2a, gebildet ist. Der Vorteil dieser Lösung besteht darin, dass kein zusätzliches Umlenkteil benötigt wird. Allerdings zeigt sich, dass bei diesem Aufbau der Figur 3 die erzeugte Magnetkraft gering ist. Folglich ergibt sich eine nur sehr kleine Bremswirkung, die in vielen Anwendungsfällen nicht ausreichend ist, gerade wenn massive und folglich schwere Rollläden oder Rolltore betätigt werden sollen. Folglich ist das in Figur 3 gezeigte Beispiel nur dann einsetzbar, wenn die anwendungsspezifischen, auftretenden Drehmomente klein sind.

Der vorliegenden Erfindung liegt nun die Aufgabe zugrunde, einen Rohrantrieb, wie er vorstehend beschrieben ist, so weiterzubilden, dass er bei vergleichbaren Abmessungen des Motors auch für Anwendungen mit höheren erforderlichen Drehmomenten einsetzbar ist.

Diese Aufgabe wird durch einen Rohrantrieb mit den Merkmalen des Anspruchs 1 gelöst. Bevorzugte Ausführungsformen sind den abhängigen Ansprüchen zu entnehmen.

Wesentlich ist, dass in die ringförmige Nut, die zwischen Welle und Kurzschlussring gebildet ist, ein Strom leitender Einlegering vollständig eingefügt ist. Dieser Einlegering verstärkt die durch das Magnetfeld erzeugte magnetische Kraft, um die Bremse vom Lagerteil weg zu ziehen und damit eine Drehung des Rohrs, in das diese Antriebseinheit eingesetzt ist, freizugeben.

Der Reibbelag, wie er vorstehend erwähnt ist, wirkt in der Einheit sowohl als Bremsbelag als auch als Kupplungsbelag. Darüber hinaus kann dieser Reibbelag fest mit der Bremsscheibe oder dem Lagerschild verbunden sein. Außerdem kann der erwähnte Reibbelag aus mehreren einzelnen Scheiben zusammengesetzt sein, die, um die Einheit zu bremsen, gegeneinander unter dem Druck der Feder gedrückt werden.

Weiterhin umfasst der vorstehend erwähnte Rotor üblicherweise die Rotorbleche und ist mit Aluminium ausgegossen.

Obwohl mit der erfindungsgemäßen Maßnahme nur ein kleiner, zusätzlicher Ring, als Kurzschlussring bezeichnet, erforderlich ist, können die Magnetkräfte, um die Teile der Bremseinheit zu lösen, so erhöht werden, dass die Verwendung von Federn mit größerer Federkraft möglich ist. Umgekehrt erzeugen solche Federn mit größerer Federkraft entsprechend höhere Kräfte, mit denen sie die Teile der Bremseinheit in Eingriff halten.

Es hat sich gezeigt, dass für den Einlegering eine Länge von 2 bis 10 mm, bezogen auf einen Rotor, der einen Außendurchmesser von 15 bis 100 mm aufweist, ausreichend ist. Vorzugsweise sollte der Einlegering bei einem solchen Außendurchmesser des Rotors eine Länge von etwa 4 mm aufweisen.

Der Kurzschlussring, wie er eingesetzt wird, ist im Rotor vergossen, besteht üblicherweise aus Aluminium und ist durch Vergießen mit den Alustegen des Rotors verbunden. Der Kurzschlussring steht in axialer Richtung so weit über das Ende des Rotorblechs vor, dass sich der Einlegering in die zwischen Welle und Kurzschlussring gebildete Ringnut in axialer Richtung vollständig einlegen kann.

Der Einlegering und der Kurzschlussring können fest miteinander verbunden werden. Einlegering und Kurzschlussring sollten als gesonderte Teile ausgeführt sein, da ansonsten dann, wenn Einlegering und Kurzschlussring als ein entsprechend groß dimensionierter einteiliger Ring ausgeführt werden würden, dies einen wesentlichen Einfluss auf die Motoreigenschaften, wie zum Beispiel das Anzugsmoment, haben könnte. Dadurch, dass Einlegering und Kurzschlussring als zwei Teile ausgeführt sind, die gegebenenfalls fest miteinander verbunden sind, bleiben die ursprünglichen Motoreigenschaften erhalten, die ohne den Einlegering gegeben wären.

Um die Anzahl der erforderlichen Bauteile gering zu halten, könnte der Einlegering Teil der Feder sein. Der Einlegering könnte hierzu durch die erste Windung der Feder gebildet werden. Die Windungen der Feder, die die Federkraft bereitstellen sollen, könnten entsprechend aus dünnerem Material gewickelt sein.

Um eine optimale Federwirkung zu erreichen, und im Hinblick auf eine lange Haltbarkeit der Feder, sollten für die Federn Materialien wie CuZn, CuBe und CuSn verwendet werden.

Für die Feder wird vorzugsweise eine Schraubendruckfeder eingesetzt. Grundsätzlich sind aber auch andere Federtypen für die Feder möglich. Eine relativ kleine Federkraft lässt sich allerdings am einfachsten mit einer Schraubenfeder erzeugen, so dass dieser Federtyp bevorzugt zu verwenden ist.

Die erfindungsgemäße Ausführungsform des Rohrantriebs wird nachfolgend anhand der Figur 1 der Zeichnung beschrieben.

In den einzelnen Figuren der Zeichnungen zeigen
- Figur 1: die erfindungsgemäße Ausgestaltung eines Rohrantriebs,
- Figur 2: eine erste Ausführung eines Rohrantriebs mit Bremseinheit nach dem Stand der Technik und
- Figur 3: eine zweite Ausführung eines Rohrantriebs mit Bremseinheit, um im Vergleich dazu die erfindungsgemäßen Maßnahmen, wie sie in Figur 1 gezeigt sind, darzustellen.

Da die Figuren 2 und 3 bereits in der Beschreibungseinleitung beschrieben wurden, wird nachfolgend nur der erfindungsgemäße Rohrantrieb, wie er in Figur 1 gezeigt ist, näher erläutert.

Der Rohrantrieb, wie ihn die Figur 1 zeigt, umfasst den Motor 1 mit Rotor 2 und Rotorblech 3, die Welle 4 und den Kurzschlussring 6'. Auch ist eine Ringnut 13' zwischen dem Wellenabschnitt 7 der Welle 4 und dem Kurzschlussring 6' ausgebildet.

Die Bremseinheit 8 umfasst, entsprechend der Ausführungsform der Figur 3, eine Bremsscheibe 9, einen Bremsbelag 10 sowie ein Lagerschild 15. An dem dem Rotor 2 zugewandten Ende ist an der Bremsscheibe 9 ein Metallteil 12 angeordnet, das sich über den Kurzschlussring 6' schiebt. Wesentlich bei dieser Ausführungsform ist, dass ein zusätzlicher Einlegering 16 in die Ringnut 13' zwischen dem Kurzschlussring 6' und dem Wellenabschnitt 7 der Motorwelle 4 vollständig eingelegt ist. Dieser Einlegering 16 verstärkt den Stromfluss im eingeschalteten Zustand des Motors. Im Rotorblech 3' wird folglich ein stärkeres Magnetfeld erzeugt, das das Metallteil 12 anzieht. Dieser Aufbau hat den Vorteil, dass, vergleicht man mit der Ausführungsform der Figur 2a, kein zusätzliches Umlenkteil 5, wie es in Figur 2a gezeigt ist, im Rotor 2 eingegossen werden muss. Dieser zusätzliche Einlegering 16 ist darüber hinaus sehr leicht zu montieren. Durch diese Maßnahme wird aber ein Magnetfeld in einer Stärke erhalten, das dem Magnetfeld entspricht, wie es in der Anordnung der Figur 2a erreicht werden kann.

### Bezugszeichenliste

- 1: Motor
- 2: Rotor
- 3, 3': Rotorblech
- 4: Welle
- 5: Umlenkteil
- 6, 6': Kurzschlussring
- 7: Wellenabschnitt
- 8: Bremseinheit
- 9: Bremsscheibe
- 10: Reibbelag
- 11: Lagerteil
- 12: Metallteil
- 13, 13': Ringnut
- 14: Feder

## Patentansprüche

1. Rohrantrieb mit einem Motor, der einen drehfest auf einer Welle angeordneten Rotor, der Rotorbleche und einen Kurzschlussring umfasst, aufweist, sowie mit einer der einen Stirnseite des Rotors zugeordneten Bremseinheit, die zentrisch auf der Welle angeordnet ist, wobei der Kurzschlussring die Welle umgibt und an dieser einen Stirnseite des Rotors angeordnet ist,
wobei die Bremseinheit eine Bremsscheibe sowie einen dazu zugeordneten Reibbelag und ein sich auf der anderen Seite des Reibbelags anlegendes Lagerschild, das eine Drehmomentstütze bildet, aufweist,
wobei mindestens eine Feder, die sich an der Stirnseite des Rotors abstützt, eine Kraft auf die Bremsscheibe ausübt und somit den Reibbelag zwischen Bremsscheibe und Lagerschild klemmend hält, und
wobei die Bremsscheibe ein Metallteil aufweist, das dann, wenn unter Betätigung des Motors in dem Rotor Strom fließt, die Bremsscheibe zu dem Rotor durch das sich im Rotor aufbauende Magnetfeld gezogen wird und **dadurch** der Reibbelag zwischen Bremsscheibe und Lagerschild freigegeben wird,
**dadurch gekennzeichnet, dass** in eine ringförmige Nut (13'), die zwischen Welle (4) und Kurzschlussring (6') gebildet ist, ein Strom leitender Einlegering (16) vollständig eingefügt ist.

2. Rohrantrieb nach Anspruch 1, **dadurch gekennzeichnet, dass** der Einlegering (16) eine Länge von 2 bis 10 mm aufweist, bezogen auf einen Rotor (2), der einen Außendurchmesser von 15 bis 100 mm aufweist.

3. Rohrantrieb nach Anspruch 2, **dadurch gekennzeichnet, dass** der Einlegering (16) eine Länge von etwa 4 mm aufweist.

4. Rohrantrieb nach einem der Ansprüche 1 bis 3, **dadurch gekennzeichnet, dass** der Einlegering (16) und der Kurzschlussring (6') fest miteinander verbunden sind.

5. Rohrantrieb nach einem der Ansprüche 1 bis 4, **dadurch gekennzeichnet, dass** der Einlegering (16) Teil der Feder (14) ist.

6. Rohrantrieb nach Anspruch 5, **dadurch gekennzeichnet, dass** der Einlegering (16) durch die erste Windung der Feder (14) gebildet ist.

7. Rohrantrieb nach einem der Ansprüche 1 bis 5, **dadurch gekennzeichnet, dass** die Feder (14) aus CuZn gefertigt ist.

8. Rohrantrieb nach einem der Ansprüche 1 bis 5, **dadurch gekennzeichnet, dass** die Feder (14) aus CuBe gefertigt ist.

9. Rohrantrieb nach einem der Ansprüche 1 bis 5, **dadurch gekennzeichnet, dass** die Feder (14) aus CuSn gefertigt ist.

## Claims

1. Tubular drive with a motor, having a rotor, which is arranged on a shaft to be secure against relative rotation and which comprises rotor laminations and a short-circuit ring, as well as with a brake unit, which is associated with an end face of the rotor and which is centrally arranged on the shaft, wherein the short-circuit ring surrounds the shaft and an end face of the rotor is arranged at the shaft,
wherein the brake unit comprises a brake disc as well as a friction lining associated therewith and a bearing plate, which is disposed on the other side of the friction lining and which forms a torque support,
wherein at least one spring, which is supported at an end face of the rotor, exerts a force on the brake disc and thus keeps the friction lining clamped between brake disc and bearing plate, and
wherein the brake disc comprises a metal part such that when under actuation of the motor current flows in the rotor the brake disc is drawn towards the rotor by the magnetic field building up in the rotor and thereby the friction lining is freed between brake disc and bearing plate,
**characterised in that** a current-conducting insert ring (16) is completely inserted into an annular groove (13') formed between shaft (4) and short-circuit ring (6').

2. Tubular drive according to claim 1, **characterised in that** the insert ring (16) has a length of 2 to 10 millimetres referred to a rotor (2) having an outer diameter of 15 to 100 millimetres.

3. Tubular drive according to claim 2, **characterised in that** the insert ring (16) has a length of approximately 4 millimetres.

4. Tubular drive according to any one of claims 1 to 3, **characterised in that** the insert ring (16) and the short-circuit ring (6') are fixedly connected together.

5. Tubular drive according to any one of claims 1 to 4, **characterised in that** the insert ring (16) is part of the spring (14).

6. Tubular drive according to claim 5, **characterised in that** the insert ring (16) is formed by the first coil of the spring (14).

7. Tubular drive according to any one of claims 1 to 5, **characterised in that** the spring (14) is made of CuZn.

8. Tubular drive according to any one of claims 1 to 5, **characterised in that** the spring (14) is made of CuBe.

9. Tubular drive according to any one of claims 1 to 5, **characterised in that** the spring (14) is made of CuSn.

## Revendications

1. Entraînement tubulaire avec un moteur, qui comprend un rotor disposé de manière solidaire en rotation sur un arbre et qui comprend des tôles de rotor et une bague de court-circuit, ainsi qu'avec une unité de freinage associée à l'un des côtés frontaux du rotor, qui est disposée centralement sur l'arbre, la bague de court-circuit entourant l'arbre et étant disposée sur ledit un des côtés frontaux du rotor,
l'unité de freinage présentant un disque de frein ainsi qu'une garniture de friction associée à celui-ci et une flasque de palier s'appliquant sur l'autre côté de la garniture de friction, laquelle forme un support de couple,
au moins un ressort, qui s'appuie sur le côté frontal du rotor, exerçant une force sur le disque de frein et retenant ainsi la garniture de friction entre le disque de frein et la flasque de palier, et
le disque de frein présentant une partie métallique, de sorte que, lorsque du courant passe dans le rotor sous l'actionnement du moteur, le disque de frein soit attiré vers le rotor par le champ magnétique s'établissant dans le rotor, et que de ce fait la garniture de friction soit libérée entre le disque de frein et la flasque de palier,
**caractérisé en ce que** dans une rainure de forme annulaire (13') qui est formée entre l'arbre (4) et la bague de court-circuit (6'), est complètement introduite une bague d'introduction (16) conductrice du courant.

2. Entraînement tubulaire selon la revendication 1, **caractérisé en ce que** la bague d'introduction (16) présente une longueur de 2 à 10 mm, par rapport à un rotor (2), qui présente un diamètre extérieur de 15 à 100 mm.

3. Entraînement tubulaire selon la revendication 2, **caractérisé en ce que** la bague d'introduction (16) présente une longueur d'environ 4 mm.

4. Entraînement tubulaire selon l'une quelconque des revendications 1 à 3, **caractérisé en ce que** la bague d'introduction (16) et la bague de court-circuit (6') sont connectées l'une à l'autre fixement.

5. Entraînement tubulaire selon l'une quelconque des revendications 1 à 4, **caractérisé en ce que** la bague d'introduction (16) fait partie du ressort (14) .

6. Entraînement tubulaire selon la revendication 5, **caractérisé en ce que** la bague d'introduction (16) est formée par le premier enroulement du ressort (14) .

7. Entraînement tubulaire selon l'une quelconque des revendications 1 à 5, **caractérisé en ce que** le ressort (14) est fabriqué en CuZn.

8. Entraînement tubulaire selon l'une quelconque des revendications 1 à 5, **caractérisé en ce que** le ressort (14) est fabriqué en CuBe.

9. Entraînement tubulaire selon l'une quelconque des revendications 1 à 5, **caractérisé en ce que** le ressort (14) est fabriqué en CuSn.
